(19) Europäisches Patentamt / European Patent Office / Office européen des brevets

(11) **EP 3 968 593 B1**

(12) **EUROPEAN PATENT SPECIFICATION**

(45) Date of publication and mention of the grant of the patent:
**02.07.2025 Bulletin 2025/27**

(21) Application number: **20201687.9**

(22) Date of filing: **14.10.2020**

(51) International Patent Classification (IPC):
*H04L 9/40* (2022.01)       *G06F 21/57* (2013.01)

(52) Cooperative Patent Classification (CPC):
**H04L 63/1433; G06F 21/577;** G06F 2221/034

(54) **METHOD OF AUTOMATED VALIDATION OF NETBLOCKS OF A COMPANY**

VERFAHREN ZUR AUTOMATISCHEN VALIDIERUNG VON NETZBLÖCKEN EINES UNTERNEHMENS

PROCÉDÉ DE VALIDATION AUTOMATISÉE DES BLOCS RÉSEAU D'UNE ENTREPRISE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2020 EP 20195992**

(43) Date of publication of application:
**16.03.2022 Bulletin 2022/11**

(73) Proprietor: **Deutsche Telekom AG**
**53113 Bonn (DE)**

(72) Inventors:
• SBEITI, Mohamad
  **45657 Recklinghausen (DE)**
• WILL, Niclas
  **51109 Köln (DE)**

(74) Representative: **Braun-Dullaeus Pannen Emmerling**
**Patent- & Rechtsanwaltspartnerschaft mbB**
**Platz der Ideen 2**
**40476 Düsseldorf (DE)**

(56) References cited:
**US-A1- 2016 330 245     US-A1- 2018 375 894**
**US-B1- 9 241 007**

## Description

The invention relates to a method, a computer system and a computer program product that enable automated validation of netblocks of a company. This basically means that techniques are provided to check if the IP addresses within the netblock belong to a certain company.

During the last years, digitization has become more and more relevant and is an integral party in our daily lives. It is beyond dispute that security is a core need for digitization, Industry 4.0 and Internet of Things (IoT), and with 5G - the digital life - the "attack surface" is to become larger due to the new dimensions of connected entities.

According to the source "https://github.com/BishopFox/eyeballer", there are 16 billion IoT connected devices in 2016, while 29 billion devices are forecasted by 2022. Meanwhile, the number of successful large-scale cyber-attacks is rising, e.g., Emotet and WannaCry, and the asymmetry in the cyberwarfare is increasing. Here, skilled hacker ability increases to harm enterprises, organizations and even states despite more investments in the defense line.

Thereby, a fundamental question the driver of digitization and 5G needs to answer is: How adopters of digitization and 5G can be well prepared against security threats?

Especially the following three points pose an immense challenge, with which existing security measures and tools have not been able to cope:

- A detailed overview of the assets of an enterprise/internet service provider is decreasing due to the continuous boost of new online services and interconnected systems, combined with agile development methods and the emerging mutlicloud deployment strategy. However, a service provider needs to know which digital services he offers in order to shield those services from cyber-attacks.

- The number of discovered vulnerabilities is rapidly increasing. In the last two years an 88% increase in application vulnerabilities was witnessed. This curve is even expected to continue rising due to the growing number of services and products combined with the total increase of resources and capabilities in the area of vulnerability research.

- The exploitation time of security vulnerabilities is rapidly decreasing. According to a "Fireeye" report, two vulnerabilities were successfully exploited within hours of a patch release, CVE-2018-2628 and CVE-2018-7602. This is because the number of online easy-to-use open-source exploitation tools and Proof-of-Concepts have become widespread.

Due to these facts and the limitation of existing solutions, even malicious users with low level of expertise have become capable to hack large organizations, internet service provider and/or internet capable devices.

US 2018/375894 A1 teaches an computer-implemented method for mapping Internet Protocol addresses for an organization may include receiving information for an organization from an organizational server, extracting data from a plurality of server data sources associated with the information, mapping the data from the plurality of sever data sources to the information, and determining, based at least in part on the mapped data, a list of IP addresses identifying one or more relationships associated with the organization thereby facilitating performing a security posture analysis against a malicious attack.

In the view of above, it is an object of the present invention to provide a method, a computer and a computer program product that enable organizations, internet service provider and/or internet capable devices to efficiently perform security investigations.

This object is solved by the features of the independent claims.

The features of the various aspects of the invention described below or the various examples of implementation may be combined with each other, unless this is explicitly excluded or is technically impossible.

A netblock is a range of consecutive IP addresses, for instance: 196.25.0.0-196.25.255.255. Netblocks are sometimes displayed in Classless InterDomain Routing (CIDR) notation. For instance, 196.25.0.0-196.25.255.255 is 196.25.0.0/16. The list of organization names and main domain names (and substrings of these) are collected in previous steps about an enterprise. These are fed to regional Internet registry (RIR) databases (online available) and all netblocks having this information are gathered. For several reasons like inaccurate, outdated or invalid data in the RIRs' databases, it is necessary to validate the netblocks. The validation is also necessary to verify if the netblocks, even when they belong to an enterprise, are really being used by that enterprise and not by one of its customers. An IP address of netblock is considered being valid if this IP address belongs to the company in question. Basic aspects of the validating step are taught in the European patent application with the application number 20195992.1. Searching, clustering and validating netblocks has the advantage that other active IT systems and/or IT services that may belong to the entity can be effectively identified in order to obtain a comprehensive and up-to-date overview of the attack surface of the entity. Netblocks can comprise the IP addresses of IT services that are not related to webpages for example. Therefore, the invention enables the validating of netblocks that can be used in further security assessments. The validating insurers that the netblocks really belong to that company in question. The valid marked netblocks can be clustered into "similar" groups and then efficiently be tested with respect to security issues.

In an embodiment, the steps of the method are looped over list of netblocks. This has the advantage that not only one netblock but multiple netblocks can efficiently be validated and marked accordingly, too.

In an embodiment, the netblock or the list of netblocks is generated by transferring organization names, main domains and/or other information about the company into a netblock data source. Hence, a netblock searching step is performed, wherein a list of netblocks is generated by using an initial target name (e.g. Telekom, Amazon), additional target names, main domains of the companies and/or the subdomains as input to the netblock data source, in particular a Regional Internet Registry or a Whois database. An algorithm can be configured to search for appropriate search strings within these databases. This provides the advantage of an efficient way to generate a netblock or the list of netblocks by means of information which are easy accessible.

In an embodiment, the validation step comprises an advance checking step. In particular, the advance checking step is executed before other parts of the validation step are performed. The advance checking step checks if a predefined number of IP addresses, in particular if two IP addresses within the same net block, are valid in the same net block. Only if this is true, the validation process continues. This offers the advantage that computational resources of the validation process are only used if there is an indication that the net block really belongs to the company. This increases the efficiency of the method.

In an embodiment, the validation step comprises a determination of the number of responsive IP addresses of the netblock, $n_{resp}$, because only responsive IP addresses can be validated. Therefore, this provides the advantage of an efficient validation process by excluding nonresponsive IP addresses from further validation tests.

In an embodiment, the determination of the number of responsive IP addresses comprises an evaluation of the IP address range, $n_{tot}$. This provides the advantage that an algorithm can run over all IP addresses within the network $n_{tot}$ in order to test if they are responsive IP addresses.

In an embodiment, based on the IP address range the responsive IP addresses are obtained by a complete port scan or can be obtained by inspecting an external data source. A complete port scan uses frequently used ports like 80, 443, 22 and/or 25. Especially in case of IPv4 netblocks, a port scan for a single port can be performed within five minutes. On the other hand if the address space is very large, as it is the case with IPv6, it can be more efficient to access the external data source of a provider that performs regular scans on the whole Internet address range (e.g. Censys, Shodan or Project Sonar Port Scan) to obtain the responsive ports. Using the external data source has the downside that one does not know about the up-to-dateness of the data.

In an embodiment, validation features are extracted to perform the validation step. To this end, a set of netblocks validation features are defined that can also be used in a clustering algorithm to get clusters based on those features (example of netblocks validation features are netname, description, registrant contact, registrant contact email address, administrative contact, administrative contact email address, etc.). These communication features are easy accessible.

In an embodiment, the evaluation is based on statistical methods. This provides the advantage that users can define how to set the confidence level in order to judge if the netblock is valid or not. If more netblocks shall be marked as valid, the user can set a lower confidence level for the statistical evaluation. Setting the confidence level lower also results in the fact that less IP addresses need to be tested. Of course, the former statements are vice versa if the user chooses a higher confidence level, e.g. of 99%. It follows that the statistical methods provide a flexible method to judge if the netblock is valid, invalid or not determinable.

In an embodiment, a needed number out of the total number of responsive IP addresses, i.e. subset, is determined to achieve significant results in the evaluation step. This provides the advantage that the method can be performed very efficiently without testing unnecessary IP addresses.

In an embodiment, the subset is expanded up to the total number of responsive IP Addresses until the evaluation is statistically significant. This provides the advantage of having an alternative strategy if the number of IP addresses of the subset is not sufficient to achieve a significant result in order to mark the netblock valid or invalid. However, because this alternative strategy of using the total number of responsive IP addresses is only used if the subset is not sufficient, the method first tries the most efficient approach. First using the subset of responsive IP addresses and then expanding it to the total number of responsive IP addresses does in principle not demand more computational resources then using the total number of responsive IP addresses in the first place. This shows the benefits of the step-by-step approach.

In the following, preferred implementation examples of the present invention are explained with reference to the accompanying figure:

Fig. 1    shows an overview of a modular solution approach to mitigate cyberattacks,

Fig. 2:    shows a schematic overview flow chart of finding an validating IT-services or IT-systems of a company,

Fig. 3a    shows a schematic flow chart of a netblock searching step that is performed when the netblock searching step is performed for the first time,

Fig. 3b     shows a schematic flow chart of a netblock searching step that is performed when further iterations are performed.

Fig. 4     shows schematic flow chart of a netblock validation.

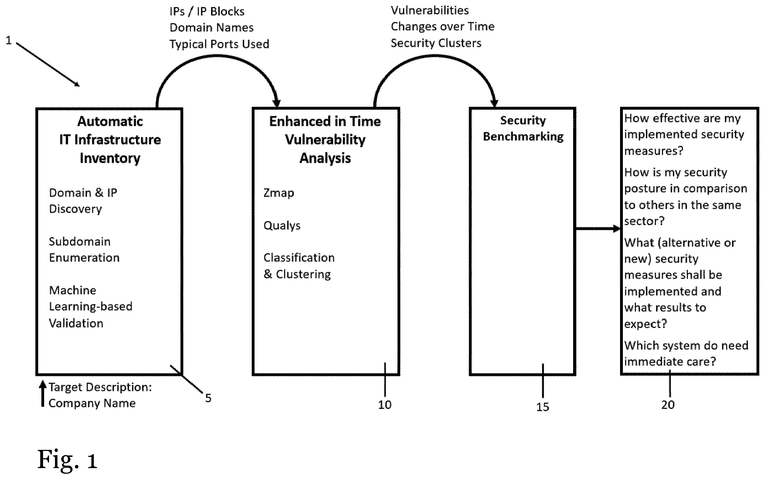

Fig. 1 shows an overview of a modular solution approach 1 to mitigate cyberattacks, wherein the invention represents one module of the solution approach.

The modular solution approach 1 is a novel combination of systems/modules for identifying and evaluating the attack surface of a company in real time. It automatically retrieves a comprehensive inventory of the IT infrastructure of a company/internet service provider. Based on an innovative framework, the modular solution approach 1 interconnects different systems in a recursive manner to efficiently collect all in-scope information. Moreover, it is enhanced in time vulnerability analysis of a company's IT infrastructure makes the modular solution approach 1 an attractive solution for risk management of oneself and of contractual partners. The information gathered by the modular solution approach 1 is relevant for any company to accelerate management discussions and to take appropriate IT security decisions.

A first module 5 focuses on creating a list of all comprehensive inventory/list of the IT infrastructure of a company/internet service provider as a starting point in an automatic fashion. In principle, all cyber risks could be determined manually from this comprehensive list. However, especially in the case of large companies this list is likely to be so large and the individual risk of each IT-unit and/ or IT-services could change so dynamically that an efficient risk assessment is only possible if the large number of IT-unit and/or IT-services, e.g. websites and/or internet capable devices, is clustered in groups having similar properties. The next module is a classification and clustering module 10 of the modular solution approach 1, which leads to a significant improve of the overall performance of the modular solution approach 1, in particular it provides better attack surface evaluation and an overview of higher transparency and accuracy.

The third module 15 serves the purpose to evaluate the vulnerabilities of each cluster, which is very efficient because that each IT-unit and/or each IT-service within the same cluster shows a similar vulnerability.

The box 20 shows possible insights that the company gets from the modular solution approach 1, namely: How effective are my implemented security measures? How is my security posture in comparison to other companies in the same sector? What (alternative or new) security measures shall be implemented and which results are to expect? Which IT-unit and/or which IT-service needs immediate care?

In the following it might happen due to ease the reading of the text that only the term IT-service will be used. However, the described techniques can be applied to the IT-units, too.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

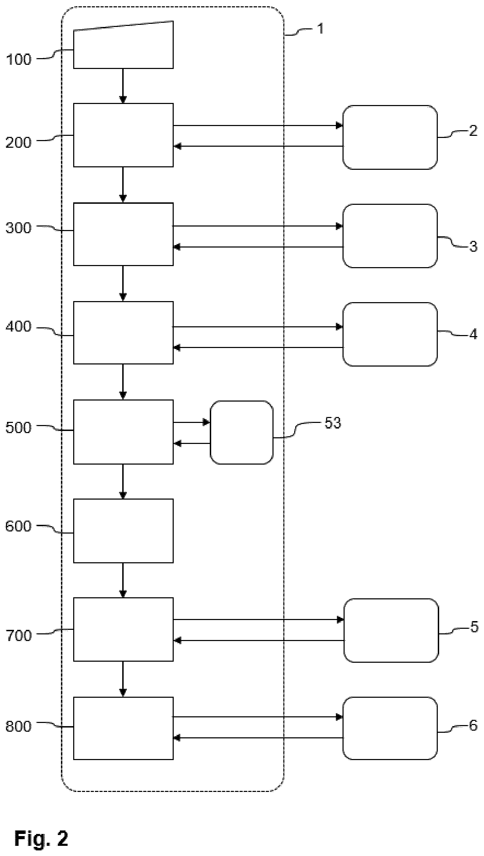

Given the large number of assets (IT systems) per enterprise and the different indicators of security issues in general, it is imperative to have (semi-) automated methods to discover relevant security issues on a large scale. One major step towards increasing the detection coverage and rate of security issues is to gain a more transparent and accurate overview of the network. Fig. 2 shows a schematic overview of the method for automatic and dynamic determination of IT systems and/or IT-services belonging to an entity, respectively a company, an enterprise, an organization or the like. The method starts with the initial step 100, wherein an initial target name is defined. The initial target name can be the name or title of the entity, e.g. "Deutsche Telekom". A user can enter the initial target name by an input device of a computer system 1 that performs the method, or it could be defined automatically by the computer system 1.

The process of automatic and dynamic determination of IT systems and/or IT-services belonging to an entity is described in the European patent application with the application number 20195992.1.

On basis of the initial target name a target name searching step 200 is performed, wherein a list of additional target names is generated. In order to search for the additional target names the computer system 1 uses the initial target name as input for a request to a first database 2. The first database 2 is for example a merge and acquisition database, such as S&P Capital IQ, Amadeus, official register (e.g. Bundesanzeiger) or the like. By access to the first database 2 the computer system 1 retrieves subsidiaries of the entity as additional target names and saves them within the list of additional target names.

The initial target name and the additional target names are used as basis for a main domain query step 300, wherein a list of main domains is generated. In order to obtain the main domains, the computer system 1 uses the initial target name and the additional target names as input for a request to a second database 3. The second database 3 is for example web certificate data base (e.g. https://crt.sh) or a search engine (e.g. google or wikipedia-api). By access to the second database 3 the computer system 1 retrieves main domains of the entity, including their subsidiaries. Main domains are in particular second level domains, e.g. "telekom.de" or "systems.de".

By usage of the queried main domains a subdomain enumeration step 400 is performed, wherein a list of subdomains is generated in addition to the existing list main domains. In order to enumerate the subdomains, the computer system 1 uses the main domains as input for a request to a third database 4. The third database 4 is for example a certificate data base (e.g. https://crt.sh), a subdomain enumeration tool or a passive domain name server database. By using the third database 4 the computer system 1 retrieves subdomains of the entity. Subdomains are in particular lower level domains, like "admin.telekom.de" or "test.telekom.de". The list of subdomains could be a part of the list of main domains, or a separate list.

The domains of the list of main domains and the list of subdomains are validated with a domain validation step 500, wherein the domains are considered as valid (belonging to entity), invalid (not belonging to entity) or not determinable, when the validity could not be determined.

For the determination of the validity of the domains validation features are extracted from the domains. Validation features of the domains are information of the owner and/or assignee of the domain, like a Whois information, a certificate information, an imprint information and/or a privacy policy information. On basis of validation feature (hard criteria), the validity of the domains could be evaluated.

In addition, supportive features are extracted from the domains and evaluated by a supervised machine learning unit 53 in order to determine the validity of the domains. Supportive features of domains are information that relate to the appearance of the domain, like a Cascading Style Sheet information, a vocabulary information and/or a Favicon information of the domain. On basis of supportive validation features (soft criteria), the validity of the domains could be evaluated by usage of the supervised machine learning unit 53.

The supervised machine learning unit 53 is implemented within the computer system 1 and corresponds to a machine algorithm, for example a random forest algorithm or the like. The machine learning unit 53 is trained by supportive features extracted from valid domains, wherein the validity was determined on basis of the validation features. By usage of the machine learning unit 53 a link between the validation features and the supportive features is realized.

Within the domain name searching step 600 new main domains and/or new subdomains are searched on the basis of the valid domains of the list of main domains and/or the list of subdomains. For the search of new main domains and/or subdomains the valid domains are used as input for reverse searching techniques. Examples for these techniques are: Reverse Whois, Reverse Name Server, Reverse Mail Server, Buit-With and/or a search engine, like a Shodan Favicon Search. The found new main domains and/or new subdomains are preferably added to the list of main domains and/or the list of subdomains and validated by usage of the domain validation step 500.

A list of IP addresses is generated on basis of the list the domains of the list of main domains and/or the list of subdomains within an IP address searching step 700. The computer system 1 uses the domains as input for a fourth database 5 in order to obtain the corresponding IP addresses. The fourth database 5 is preferably a domain name system (DNS) server, wherein the IP addresses are resolved on the basis of the domains. In a preferred embodiment the validity of the IP addresses is also evaluated within the IP address searching step 700. For that it is checked whether the IP address corresponds to a valid or invalid domain. The IP addresses of the list of IP addresses are considered as valid (belonging to entity), invalid (not belonging to entity), not determinable (when the validity could not be determined) or non-validatable.

A main idea of this invention is about a generation and validation of a list of netblocks or IP blocks in a netblock searching step 800. In the example of Fig. 2, the netblock searching step 800 is performed after all the other processes. However, in principle can be performed as the first step. Therefore, details about the other processes can be found in the European patent application with the application number 20195992.1, wherein the netblock searching and validation step 800 will be described in detail in the following.

The computer system 1 uses the initial target name, the additional target names, the main domains and/or the subdomains as input for a fifth database 6. The fifth database 6 is also named as the netblock database 6. The netblock database 6 is preferably an IP Whois database and/or a Regional Internet Registry, like the RIPE for Europe and Middle East. Preferably, all netblocks or IP blocks are collected and validated on basis of netblock validation features, such as netname, description, registrant contact, registrant contact e-mail address, administrative contact or administrative contact e-mail address.

The target name searching step 200, the main domain query step 300, the subdomain enumeration step 400, the domain validation step 500, the domain name searching step 600, the IP address searching step 700 and/or the netblock searching step 800 are repeated within iteration loops. The further iteration loop is stopped when no new active IT systems, respectively assets, are found.

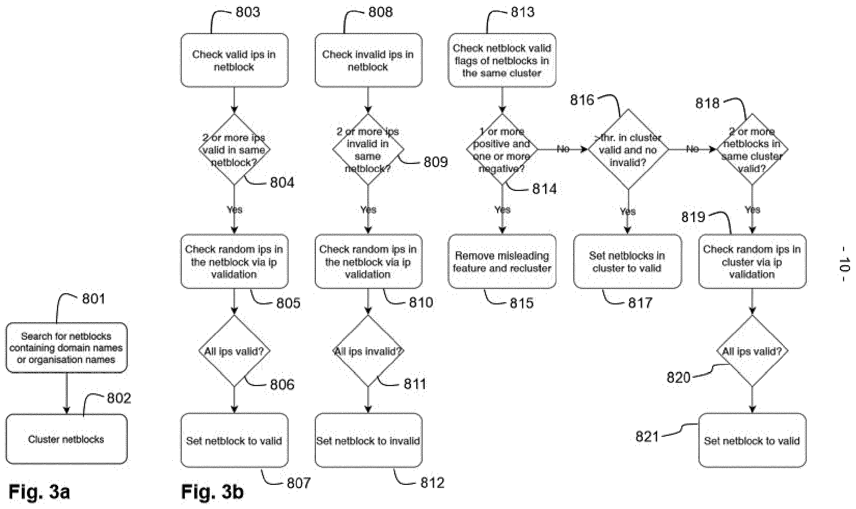

Fig. 3a and Fig. 3b show schematic flow charts of a netblock searching step 800.

The flow chart of Fig. 3a is performed when the netblock searching step 800 is performed for the first time. Here, netblocks containing known domains, target names and/or IP-addresses of a company are searched (step 801) in order to find netblocks of this company and then to classify clusters of netblocks (step 802).

The flow chart of Fig. 3b is executed when further iterations are performed. Valid IP addresses within the netblock are checked (step 803) by evaluating whether a certain number of (preferably two) IP addresses of the netblock are valid (step 804); if yes, the validity of a first number $N_{95}$ of random IP addresses of the netblock is checked by performing the validation part of the IP address searching step 700 (step 805); when all IP addresses are valid (806), the netblock is considered as valid (step 807). The first number $N_{95}$ is set as to ensure that one can trust the validation of step 807 with a confidence of over 95 %. If not all of the first number $N_{95}$ of IP addresses are valid, then the netblock is tagged as not determinable.

Invalid IP addresses within the netblock are checked (step 808) by evaluating whether a certain number of (preferably two) IP addresses of the netblock are invalid (step 809); if yes, the validity of a second number $N_{95}$ of random IP addresses of the netblock is checked by performing the validation part of the IP address searching step 700 (step 810). When all IP addresses are invalid (811), the netblock is considered as invalid (step 812). The number $N_{95}$ is set as to ensure that one can trust the validation of step 807 with a confidence of over 95 %. If not all of the second number $N_{95}$ of IP addresses are invalid, then the netblock is tagged as not determinable.

In the next steps, the netblocks within the same cluster are analyzed. Preferably, the valid, invalid and the not determinable tags or flags of the netblocks in the same cluster are checked (step 813). Then, it is checked whether one or more netblocks are positive and whether one or more netblocks are negative (step 814) - if this is the case, then the features that were used to cluster those two netblocks within the same cluster led to contradictory results, i.e. a valid and an invalid netblock.

Hence, those misleading features are removed and the netblocks are re-clustered (step 815); if no, it is checked whether a defined threshold of netblocks in a cluster is valid and no netblocks are invalid (step 816). If the result of step 816 is yes, the netblocks within a cluster are set to valid (step 817); if no, it is checked whether two or more netblocks in the same cluster are valid (step 818). If two or more netblocks in the same cluster are valid, the validity of random IP addresses of the netblock is checked by performing the validation part of the IP address searching step 700 (step 819). If all IP addresses are valid (820), the netblock is set to valid (step 821).

In the following, the validation step 803 of validating the individual netblocks and/or the IP addresses within those netblocks, respectively, will be described in more detail.

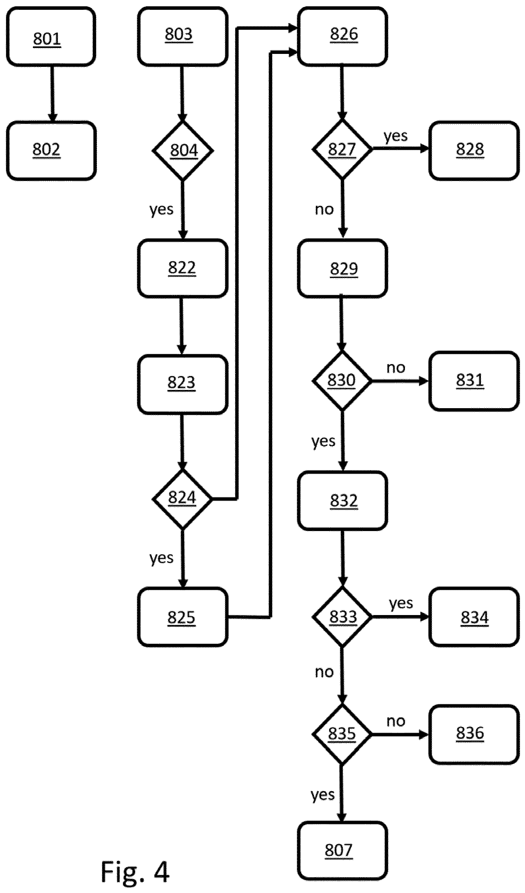

Fig. 4 shows schematic flow chart of a netblock validation.

With respect to the algorithm in Fig. 4, there exist two challenges to validate the netblocks. To address this issue, inventive statistical methods will be taught in the following.

Challenge 1: Netblocks address spaces can be huge. E.g., in the Internet Protocol version 4 (IPv4), Amazon has a netblock address space, which corresponds to a total of 16,777,216 IP addresses and thereby to a 16,777,214 potential hosts. A complete validation of these would be time-consuming, and this is just one netblock. This leads to the need of having an efficient validation method.

Challenge 2: IP address validation is based on some ports/services, which are scanned but not all IP addresses in a netblock do have running ports/services. Besides, even if they have running services, these cannot be always validated. Thus, validateable IP addresses are only a subpart of the responsive IP addresses of a netblock. This makes it difficult to decide how many valid IP addresses are needed to tag a netblock space as valid. This leads to the need of having a method with predictive power.

Statistical methods are capable of providing solutions to solve both challenge 1 and challenge 2.

The steps 801 - 804 of Fig. 4 are in principle identical to the steps 801 - 804 of Fig. 3. However, the validation procedure is being "refined".

Step 822: As an input to the method, an IP address space/netblock is provided, which starts with a first IP address $ip_{start}$ and ends with a last IP address $ip_{end}$ (or alternatively the address space is given in Classless InterDomain Routing (CIDR) notation, which implies these two parameters). Thereby, the total number of IP addresses in the address space or the netblock is calculated as $n_{total} = ip_{end} - ip_{start}$.

For IPv4 netblocks or address spaces, there exist two possibilities to identify the IP addresses that have open ports and could hence potentially be validated, the open ports are used to get a feedback of a certain IP address. In IT-systems, which are in principle active, the status if a port is open or not can change dynamically. Typically, a computer comprises multiple thousands of those ports. The first possibility is performing a port scan on the whole netblock range. The second possibility is using passive data from providers that perform regular scans on the whole internet address range (e.g. Censys, Shodan, or Project Sonar Port Scans). The second possibility has the advantage over the first possibility in terms of time, as solely a lookup in the passive database must be performed. On the other hand, there is no warranty on the accuracy of the data.

Thereby, and as nowadays a scan of the complete IPv4 Internet address space can be performed for a single port in under 5 minutes, the method introduced here recommends performing port scans. If a single port is selected to be scanned, it makes sense to choose a port number that is associated to those ports that have the highest likelihood to be open and active. Hence, it would be beneficial to use port number 80 or 443. The following list gives an overview about the most common paorts that make sense to use regarding the first possibility along with their assignment:

20　　　　File Transfer Protocol (FTP) Data Transfer;
21　　　　File Transfer Protocol (FTP) Command Control;
22　　　　Secure Shell (SSH) Secure Login;
23　　　　Telnet remote login service, unencrypted text messages;

| | |
|---|---|
| 25 | Simple Mail Transfer Protocol (SMTP) E-mail routing; |
| 53 | Domain Name System (DNS) service; |
| 67, 68 | Dynamic Host Configuration Protocol (DHCP); |
| 80 | Hypertext Transfer Protocol (HTTP) used in the World Wide Web; |
| 110 | Post Office Protocol (POP3); |
| 119 | Network News Transfer Protocol (NNTP); |
| 123 | Network Time Protocol (NTP); |
| 143 | Internet Message Access Protocol (IMAP) Management of digital mail; |
| 161 | Simple Network Management Protocol (SNMP); |
| 194 | Internet Relay Chat (IRC); |
| 443 | HTTP Secure (HTTPS) HTTP over TLS/SSL; |

For IPv6 netblocks or address spaces, the number of IP addresses is in general too large to perform a complete port scan. This is a well-known problem in recent literature on internet-wide scanning. For tackling it, several studies have proposed the use of target lists of IPv6 addresses, called IPv6 "hitlists". The IPv6 addresses belonging to the hitlist have the highest likelihood to be actively used. The goal is to create hitlists based on statistical considerations and active and passive sources. Hence, the IPv6 addresses represented a small subset of the IPv6 address space that can efficiently be scanned. These hitlists can be used to find the existing IP addresses in a given address space by port scanning only the addresses from the given address space that occur in the hitlist.

Hence, step 822 starts with a port scan on the $n_{total}$ address space or netblock, in particular when dealing with a IPv4 netblock, or by extracting passive data from providers, in particular when dealing with a IPv6 netblock. The port scan is designed to determine a number of responsive IP addresses of the netblock $n_{resp}$.

Then with the known number of responsive IP addresses $n_{resp}$ in the address space, a calculation is started to determine an estimated number of validatable **IP** addresses as $n_{vble} = n_{resp} * p_{vble}$, wherein $p_{vble}$ is the probability that a responsive **IP** address can be validated. This probability can be estimated based on previous experiments or can be arbitrarily set and then adjusted accordingly after each netblock validation. Hence, as a first guess $p_{vble}$ can be set to 1 or to 0,75.

Not all of the responsive **IP** addresses can be validated, which is basically the meaning of $p_{vble}$. The question remains which number **IP** addresses that can be validated is at least required to achieve a certain statistical significance that the whole netblock is valid.

Hence, step 823 determines the minimum required number of validated IP addresses $n_{min}$ according to the following formula:

$$n_{min} = [n' + 1/|P_1 - P_0|],$$

wherein n' equals the following:

$$\left[ \frac{z_\alpha \sqrt{P_0(1 - P_0)} + z_\beta \sqrt{P_1(1 - P_1)}}{P_1 - P_0} \right]^2.$$

If an address space is considered as being valid if it has a portion of more than 70 % of IP addresses that can be validated this leads to the following numbers of the parameters: $P_0 = 0.7$; $P_1 = 0.9$; $z_\alpha = 2.567$; $z_\beta = 1.645$ for a confidence interval of 99 % and a statistical power of 0.9. Of course, if the evaluation is performed and other assumptions and requirements, these numbers can be adapted accordingly by common statistical calculations.

Then a required number of IP addresses for the validation is calculated as $n_{req} = n_{min} / p_{vble}$. The rational behind this is that if $p_{vble}$ is being smaller than one, the actual number required for the validation needs to be larger than $n_{min}$.

The decision 824 then checks if the found number of responsive IP addresses that can be validated $n_{vbl}$ is larger or equal than the minimum number required to be validated $n_{req}$, which is $n_{vbl} \geq n_{req}$. If true, then the found number of responsive IP addresses is sufficient that the following evaluation fulfills the demands for the statistical significance. In this case, step 825 randomly selects $n_{req}$ IP addresses from the responsive IP addresses and continues with a step 826, because already the subset $n_{req}$ is sufficient for statistical significance. By using only this subset, the calculation is more efficient. If false, then the number of responsive IP addresses is too low in order to use only a subset of all the found responsive IP addresses $n_{vbl}$. Hence, all found responsive IP addresses $n_{vbl}$ need to be used in the validation step 826. To be clear, the decision 824 serves only the purpose to evaluate a possible reduction of the IP addresses that need to be validated in step 826. The requirement remains that the address space or netblock is only considered to be valid if it has a portion of valid IP addresses of more than a first threshold value, wherein this first threshold value can be set to 70%.

Decision 827 checks if the found portion of valid IP addresses "p" fulfilled one of the following equations, with the parameter n being the number of validated IP addresses:

If the equation

$$z = \frac{(p - P_0) - 1/(2n)}{\sqrt{P_0(1 - P_0)/n}} \geq z_\alpha$$

is true netblock or the address space is tagged valid.

On the other hand, if the equation

$$z = \frac{(p - P_0) + 1/(2n)}{\sqrt{P_0(1 - P_0)/n}} \leq -z_\alpha$$

is true, then the netblock or the address space is tagged invalid.

In one of these cases the method proceeds with step 828 and marks the respective netblock or address space as valid or invalid and no further steps are required for the validation process.

If none of these equations is true, then the method continues with step 829.

Step 829: if not all found IP addresses have been validated, which was the case for $n_{vble} \geq n_{req}$, then step 826 is repeated in step 822 and decision 830 does the same as decision 827. Hence, if one of these equations is true then step 831 marks the respective netblock or address space as valid or invalid and no further steps are required for the validation process.

If none of these equations is true, then the method continues with step 832. Step 832 tries to find more IP addresses within the netblock to achieve statistical significance in the following steps. Hence, a low rate mass scan is started to find all IP addresses and validate them as in step 826.

The additional found IP addresses yield different numbers for the "z" equation. Hence, the same evaluation as in decision 827 is performed in decision 833. As before, if one of these equations is true then step 834 marks the respective netblock or address space as valid or invalid and no further steps are required for the validation process.

Because at this stage no further IP addresses for the validation can be found, decision 835 now checks if there are only valid IP addresses and no single invalid IP addresses within that netblock. If this is the case, the netblock is marked as valid in step 807. If this is not the case, the netblock is marked as not determinable in step 836. This can be especially the case if the netblock has a lower number of IP addresses so that the condition of statistical significance cannot be met.

**Claims**

1. A method of automated validation of netblocks of IT-services and/or IT-systems of a company, comprising the following steps performed by a computer system:

   - as an inputting step (803): inputting a netblock, wherein the netblock comprises multiple IP addresses as an address range;
   - as a validation step (826): validating IP Addresses of the netblock, wherein an IP Address of a netblock is considered valid if this Address belongs to the company, and calculate the number of valid IP Addresses to the number of invalid IP Addresses as a first result;
   - as an evaluation step (827): evaluating based on the outcome of the first result if a netblock is valid or invalid;

   - as a marking step (828, 831, 834, 836): marking the netblock as valid, invalid or not determinable based on evaluation.

2. The method of claim 1, wherein the steps of the method are looped over a list of netblocks.

3. The method of claim 1 or 2, wherein the netblock or the list of netblocks is generated by transferring organization names, main domains and/or other information about the company into a netblock data source.

4. The method of any of the claims, wherein validation step (826) comprises an advance checking step (804).

5. The method of any of the claims, wherein the validation step (826) comprises a determination of the number of responsive IP addresses of the netblock (822).

6. The method of claim 5, wherein the determination of the number of responsive IP addresses comprises an evaluation of the IP address range.

7. The method of claim 6, wherein based on the IP address range the responsive IP addresses are obtained by a complete port scan or by accessing an external data source.

8. The method of any of the claims, wherein validation features are extracted to perform the validation step (826).

9. The method of any of the claims, wherein validation features are extracted to perform the validation step.

10. The method of any of the claims, wherein the evaluation is based on statistical methods.

11. The method of any of the claims, wherein a needed number out of the total number of responsive IP addresses, i.e. subset, is determined (825) to achieve significant results in the evaluation step.

12. The method of any of the claims, wherein the validation step is only performed on a subset of the responsive IP Addresses of the netblock.

13. The method of claim 12, wherein the subset is expanded up to the total number of responsive IP Addresses until the evaluation is statistically significant.

14. Computer system for automated validation of netblocks of IT-services and/or IT-systems of a company, configured to perform the method of any of the claims 1-13.

15. Computer program product f for automated validation of netblocks of IT-services and/or IT-systems of a company, when executed by a computer system, which causes the computer system to perform the method of any of the claims 1-13.

**Patentansprüche**

1. Verfahren zur automatischen Validierung von Netzblöcken von IT-Diensten und/oder IT-Systemen eines Unternehmens, umfassend die folgenden Schritte, die von einem Computersystem durchgeführt werden:

> - als einen Eingabeschritt (803): Eingeben eines Netzblocks, wobei der Netzblock mehrere IP-Adressen als einen Adressbereich umfasst;
> - als einen Validierungsschritt (826): Validieren von IP-Adressen des Netzblocks, wobei eine IP-Adresse eines Netzblocks als gültig angesehen wird, wenn die Adresse zu dem Unternehmen gehört, und Berechnen der Anzahl gültiger IP-Adressen zur Anzahl ungültiger IP-Adressen als ein erstes Ergebnis;
> - als einen Bewertungsschritt (827): Bewerten basierend auf dem Ergebnis des ersten Ergebnisses, ob ein Netzblock gültig oder ungültig ist;
> - als einen Markierungsschritt (828, 831, 834, 836): Markieren des Netzblocks als gültig, ungültig oder nicht bestimmbar basierend auf der Bewertung.

2. Verfahren nach Anspruch 1, wobei die Schritte des Verfahrens über eine Liste von Netzblöcken geschleift werden.

3. Verfahren nach Anspruch 1 oder 2, wobei der Netzblock oder die Liste von Netzblöcken durch Übertragen von Organisationsnamen, Hauptdomänen und/oder anderen Informationen über das Unternehmen in eine Netzblockdatenquelle erzeugt wird.

4. Verfahren nach einem der Ansprüche, wobei der Validierungsschritt (826) einen Vorabprüfschritt (804) umfasst.

5. Verfahren nach einem der Ansprüche, wobei der Validierungsschritt (826) eine Bestimmung der Anzahl von antwortenden IP-Adressen des Netzblocks (822) umfasst.

6. Verfahren nach Anspruch 5, wobei die Bestimmung der Anzahl von antwortenden IP-Adressen eine Auswertung des IP-Adressbereichs umfasst.

7. Verfahren nach Anspruch 6, wobei basierend auf dem IP-Adressbereich die antwortenden IP-Adressen durch einen vollständigen Port-Scan oder durch Zugreifen auf eine externe Datenquelle erlangt werden.

8. Verfahren nach einem der Ansprüche, wobei Validierungsmerkmale extrahiert werden, um den Validierungsschritt (826) durchzuführen.

9. Verfahren nach einem der Ansprüche, wobei Validierungsmerkmale extrahiert werden, um den Validierungsschritt durchzuführen.

10. Verfahren nach einem der Ansprüche, wobei die Bewertung auf statistischen Verfahren basiert.

11. Verfahren nach einem der Ansprüche, wobei eine benötigte Anzahl aus der Gesamtzahl von antwortenden IP-Adressen, d. h. eine Teilmenge, bestimmt wird (825), um signifikante Ergebnisse in dem Bewertungsschritt zu erzielen.

12. Verfahren nach einem der Ansprüche, wobei der Validierungsschritt nur an einer Teilmenge der antwortenden IP-Adressen des Netzblocks durchgeführt wird.

13. Verfahren nach Anspruch 12, wobei die Teilmenge bis zur Gesamtzahl von antwortenden IP-Adressen erweitert wird, bis die Bewertung statistisch signifikant ist.

14. Computersystem zur automatischen Validierung von Netzblöcken von IT-Diensten und/oder IT-Systemen eines Unternehmens, das dazu eingerichtet ist, das Verfahren nach einem der Ansprüche 1-13 durchzuführen.

15. Computerprogrammprodukt zur automatischen Validierung von Netzblöcken von IT-Diensten und/oder IT-Systemen eines Unternehmens, das, wenn es von einem Computersystem ausgeführt wird, bewirkt, dass das Computersystem das Verfahren nach einem der Ansprüche 1-13 durchführt.

**Revendications**

1. Procédé de validation automatisée des blocs réseau des services informatiques et/ou systèmes informatiques d'une entreprise, comprenant les étapes suivantes exécutées par un système informatique :

> - comme étape de saisie (803) : saisie d'un bloc réseau, dans lequel le bloc réseau comprend plusieurs adresses IP comme plage d'adresses ;
> - comme étape de validation (826) : validation des adresses IP du bloc réseau, dans lequel une adresse IP d'un bloc réseau est considérée comme valide si cette adresse appartient à l'entreprise et calcul du nombre d'adresses IP valides par rapport au nombre d'adresses IP invalides comme premier résultat ;
- comme étape d'évaluation (827) : évaluation, sur la base du premier résultat, de la validité ou de l'invalidité d'un bloc réseau ;
- comme étapes de marquage (828, 831, 834, 836) : marquage du bloc réseau comme valide, invalide ou non déterminable sur la base de l'évaluation.

2. Procédé selon la revendication 1, dans lequel les étapes du procédé sont exécutées en boucle sur une liste de blocs réseau.

3. Procédé selon la revendication 1 ou 2, dans lequel le bloc réseau ou la liste de blocs réseau est généré par le transfert des noms d'organisation, des domaines principaux et/ou d'autres informations relatives à l'entreprise dans une source de données de blocs réseau.

4. Procédé selon une quelconque des revendications, dans lequel l'étape de validation (826) comprend une étape de vérification préalable (804).

5. Procédé selon une quelconque des revendications, dans lequel l'étape de validation (826) comprend la détermination du nombre d'adresses IP réactives du bloc réseau (822).

6. Procédé selon la revendication 5, dans lequel la détermination du nombre d'adresse IP réactives comprend une évaluation de la plage d'adresse IP.

7. Procédé selon la revendication 6, dans lequel sur la base de la plage d'adresse IP, les adresses IP réactives sont obtenues par un balayage de port complet ou en accédant à une source de données externe.

8. Procédé selon une quelconque des revendications, dans lequel des caractéristiques de validation sont extraites pour mettre en œuvre l'étape de validation (826).

9. Procédé selon une quelconque des revendications, dans lequel des caractéristiques de validation sont extraites pour mettre en œuvre l'étape de validation.

10. Procédé selon une quelconque des revendications, dans lequel l'évaluation est basée sur des méthodes statistiques.

11. Procédé selon une quelconque des revendications, dans lequel un nombre requis parmi le nombre total de réponses IP réactives, c'est-à-dire un sous-ensemble, est déterminé (825) afin d'obtenir des résultats significatifs à l'étape d'évaluation.

12. Procédé selon une quelconque des revendications, dans lequel l'étape de validation est effectuée uniquement sur un sous-ensemble des adresse IP réactives du bloc réseau.

13. Procédé selon la revendication 12, dans lequel le sous-ensemble est étendu jusqu'au nombre total d'adresses IP réactives jusqu'à ce que l'évaluation soit statistiquement significative.

14. Système informatique de validation automatisée des blocs réseau des services informatiques et/ou systèmes informatiques d'une entreprise, configuré pour mettre en œuvre le procédé selon une quelconque des revendications 1 à 13.

15. Produit de programme informatique de validation automatisée des blocs réseau des services informatiques et/ou systèmes informatiques d'une entreprise, lorsqu'il est exécuté par un système informatique, ce qui amène le système informatique à mettre en œuvre le procédé selon une quelconque des revendications 1 à 13.

Fig. 1

**Fig. 2**

**Fig. 3a**

801 — Search for netblocks containing domain names or organisation names

802 — Cluster netblocks

**Fig. 3b**

803 — Check valid ips in netblock

804 — 2 or more ips valid in same netblock? — Yes

805 — Check random ips in the netblock via ip validation

806 — All ips valid?

807 — Set netblock to valid

808 — Check invalid ips in netblock

809 — 2 or more ips invalid in same netblock? — Yes

810 — Check random ips in the netblock via ip validation

811 — All ips invalid?

812 — Set netblock to invalid

813 — Check netblock valid flags of netblocks in the same cluster

814 — 1 or more positive and one or more negative? — Yes / No

815 — Remove misleading feature and recluster

816 — >thr. in cluster valid and no invalid? — Yes / No

817 — Set netblocks in cluster to valid

818 — 2 or more netblocks in same cluster valid? — Yes

819 — Check random ips in cluster via ip validation

820 — All ips valid?

821 — Set netblock to valid

- 10 -

13

Fig. 4

**EP 3 968 593 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018375894 A1

- EP 20195992